(19) Europäisches Patentamt
European Patent Office
Office européen des brevets

(11) **EP 3 146 387 B1**

(12) **FASCICULE DE BREVET EUROPEEN**

(45) Date de publication et mention
de la délivrance du brevet:
**18.12.2019 Bulletin 2019/51**

(51) Int Cl.:
***G02F 1/35*** (2006.01)

(21) Numéro de dépôt: **15728426.6**

(22) Date de dépôt: **19.05.2015**

(86) Numéro de dépôt international:
**PCT/EP2015/061023**

(87) Numéro de publication internationale:
**WO 2015/177169 (26.11.2015 Gazette 2015/47)**

(54) **CELLULE DE CONVERSION POUR SYSTÈME CONVERTISSEUR DE FRÉQUENCE ET PROCÉDÉ DE CONVERSION DE FRÉQUENCE**

FREQUENZUMRICHTERSYSTEMUMWANDLUNGSZELLE UND
FREQUENZUMWANDLUNGSSYSTEM

FREQUENCY CONVERTER SYSTEM CONVERSION CELL, AND FREQUENCY CONVERSION
SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.05.2014 FR 1454514**

(43) Date de publication de la demande:
**29.03.2017 Bulletin 2017/13**

(73) Titulaires:
• **Centre National de la Recherche Scientifique
(C.N.R.S.)**
**75794 Paris Cedex 16 (FR)**
• **Institut d'Optique Graduate School**
**91127 Palaiseau cedex (FR)**
• **Universite Paris-Sud**
**91400 Orsay (FR)**

(72) Inventeurs:
• **DEYRA, Loïc**
**33600 Pessac (FR)**
• **BALEMBOIS, François**
**91870 Boissy le Sec (FR)**
• **GEORGES, Patrick**
**78590 Noisy le Roi (FR)**

(74) Mandataire: **Priori, Enrico et al**
**Marks & Clerk France**
**Immeuble "Visium"**
**22, avenue Aristide Briand**
**94117 Arcueil Cedex (FR)**

(56) Documents cités:
**DE-A1- 19 928 661      JP-A- H04 330 426
JP-A- 2001 183 712**

• **Guido Manna ET AL: "Influence of mechanical
stress on the conversion efficiency of KTP and
LBO", , 14 juin 1999 (1999-06-14), pages 289-297,
XP055164252, Extrait de l'Internet:
URL:http://proceedings.spiedigitallibrary.
org/proceeding.aspx?articleid=906881 [extrait le
2015-01-22]**
• **T Ukachi ET AL: "Phase-matched
second-harmonic generation and growth of a LiB
3 0 5 crystal", J. Opt. Soc. Am. B, 1 août 1992
(1992-08-01), pages 1128-1133, XP55210159,
Extrait de l'Internet:
URL:https://www.osapublishing.org/DirectPD
FAccess/8C13F429-C082-4EEF-BB1F97C1A915
9F5
C_6303/josab-9-7-1128.pdf?da=1&id=6303&seq
=0&mobile=no [extrait le 2015-08-28]**

**Description**

**Domaine technique de l'invention**

La présente invention concerne une cellule de conversion pour un système optique convertisseur de fréquence, un système optique convertisseur de fréquence ainsi qu'un procédé de conversion de fréquence.

**Etat de l'art**

Les processus optiques non linéaires du second ordre, tels que la génération de seconde harmonique ou l'amplification paramétrique sont très couramment utilisées pour modifier les longueurs d'onde d'émission des sources laser et présentent de nombreuses applications dans le monde scientifique et industriel, comme par exemple l'usinage laser ou la spectroscopie. Ainsi, la génération de second harmonique (ou « SHG » selon l'abréviation de l'expression anglo-saxonne « Second Harmonie Génération ») permet de diviser par deux la longueur d'onde d'une onde émise par une source laser, et passer par exemple d'un laser infrarouge à 1064 nm à un laser vert à 532 nm.

Dans les processus de conversion de fréquence, telle que la génération de seconde harmonique, on cherche pour atteindre une efficacité de conversion élevée à ce que les ondes fondamentale et harmonique se propageant avec la même vitesse de groupe. Un moyen pour faire propager deux ondes de longueurs d'onde différentes dans un même matériau sans déphasage est l'accord de phase par biréfringence (ou « BPM » selon l'expression anglo-saxonne « Biréfringent Phase-Matching »). L'accord de phase par biréfringence utilise l'asymétrie des indices de réfraction d'un cristal biréfringent entre ses axes cristallographiques pour compenser la phase accumulée par chacune des deux ondes pendant la propagation.

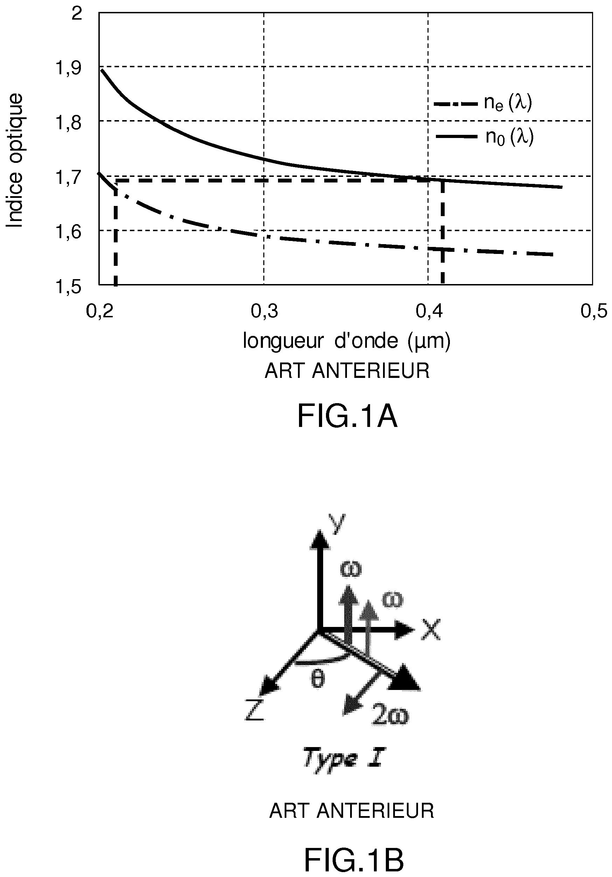

La figure 1A représente ainsi les indices de réfraction du BBO (beta-borate de barium ou $\beta$-BaB$_2$O$_4$) selon les deux axes cristallographiques, appelés respectivement indice ordinaire $n_o(\lambda)$ et indice extraordinaire $n_e(\lambda)$, en fonction de la longueur d'onde. Sur cette figure, on remarque que l'indice optique du BBO à 0,42$\mu$m selon l'axe ordinaire est égal à l'indice du BBO à 0,21 $\mu$m selon l'axe extraordinaire. Il existe donc un accord de phase par biréfringence dans le BBO pour la génération de second harmonique à partir de 420 nm si l'onde incidente est polarisée selon l'axe ordinaire du BBO. Il s'en suit la génération en sortie du cristal d'une onde à 210 nm polarisée selon l'axe extraordinaire du cristal. Ce cas de figure ($n_o(\omega) = n_e(2\omega)$) est en fait assez rare (on parle d' « accord de phase non-critique de type I » ou « NCPM » selon l'expression anglo-saxonne «non critical phase matching »), et ne permet pas de choisir quelle longueur d'onde on souhaite doubler en fréquence.

Il est cependant possible d'envoyer l'onde incidente dans le cristal selon une polarisation formant un angle $\theta$ avec l'un des axes cristallographiques, comme cela est représenté sur la figure 1B. L'une des ondes ($\omega$ ou $2\omega$) voit alors un indice optique $n(\theta)$ compris entre $n_o$ et $n_e$. Ainsi, afin d'obtenir l'accord de phase pour la génération de second harmonique par exemple, on peut jouer sur l'angle de coupe du cristal non-linéaire. Cette méthode permet d'obtenir l'accord de phase sur une large bande de fréquences (typiquement plusieurs microns), mais introduit un effet de déviation (effet de double réfraction ou « walk-off») entre les ondes fondamentale et harmonique, ce qui réduit l'efficacité de conversion et dégrade la qualité du faisceau.

La température de fonctionnement du cristal peut également être modifiée pour adapter la plage de fréquences à laquelle l'accord de phase est obtenu. Pour certains cristaux, il est ainsi possible de choisir à la fois l'angle de coupe et la température pour que les ondes fondamentale et harmonique se propagent non seulement en phase mais également dans la même direction (accord de phase non critique en angle), comme cela est décrit par exemple dans un cristal de LBO (triborate de lithium ou LiB$_3$O$_5$) dans l'article de T. Ukachi et al. (« Measurements of non-critically phase-matched second-harmonic generation in a LBO crystal », Appl. Phys. A Mater. Sci. Process 280, 279-280 (1973)).

Malgré ces degrés de liberté en angle et en température, les indices intrinsèques des cristaux non-linéaires limitent leurs possibilités d'accord de phase. Notamment, plus l'on veut générer des faisceaux de basse longueur d'onde par conversion de fréquence, plus le choix de cristaux non-linéaires se réduit. Quant à l'accord de phase par température, il est limité par la faible variation des indices, ainsi que par le fait que la plage de température applicable par un four (ou un élément Peltier) est en général limitée à la plage [-20°C - 200°C].

La présente description propose un procédé original de modification des propriétés d'accord de phase d'un cristal non linéaire biréfringent basé sur l'application d'une contrainte mécanique sur le cristal afin de modifier les indices de réfraction. Le procédé ainsi décrit permet d'étendre les possibilités d'accord de phase de certains cristaux non-linéaires.

RESUME DE L'INVENTION

Selon un premier aspect, l'invention concerne une cellule de conversion de fréquence comprenant :

- un cristal non linéaire biréfringent caractérisé par une première longueur d'onde d'accord de phase, présentant une face d'entrée destinée à recevoir au moins un faisceau incident, une face de sortie pour l'émission d'au moins un faisceau converti en fréquence, et au moins deux faces parallèles, différentes des faces d'entrée et de sortie ;

- des moyens d'application d'une force mécanique extérieure sur au moins une desdites faces parallèles, appelée face d'application de la force, résultant en une variation de la biréfringence du cristal non linéaire, la valeur de la force mécanique extérieure appliquée étant déterminée pour l'obtention de l'accord de phase dans le cristal non linéaire à une deuxième longueur d'onde d'accord de phase différente de la première longueur d'onde d'accord de phase.

Les déposants ont montré à la fois théoriquement et expérimentalement que la variation de la biréfringence du cristal non linéaire résultant de la contrainte subie par le cristal grâce à l'application d'une force mécanique extérieure sur l'une au moins des faces parallèles permettait de modifier la longueur d'onde de fonctionnement de la cellule de conversion et d'avoir ainsi un accord de phase à des longueurs d'onde pour lesquelles ce n'était jusqu'alors pas possible ou difficile.

Les processus de conversion de fréquence comprennent par exemple selon la présente description la somme de fréquence (ou SFG pour « Sum Frequency Generation »), la différence de fréquence (ou DFG pour « Différence Frequency Generation »), la génération de deuxième, troisième ou quatrième harmonique, la génération paramétrique optique, l'amplification paramétrique optique.

Avantageusement, le cristal non linéaire biréfringent est un parallélépipède rectangle, taillé selon ses plans principaux, définis chacun par deux axes cristallographies du cristal. Le cristal est alors destiné à recevoir un ou plusieurs faisceau(x) incident(s) avec un axe de propagation perpendiculaire à la face d'entrée. Cette configuration avantageuse permet d'augmenter le seuil de fracture et d'optimiser la variation de la biréfringence du cristal en fonction de la force mécanique extérieure appliquée. L'accord de phase est alors un accord de phase non critique de type I.

Selon une variante, le cristal peut être taillé hors des plans principaux, ce qui permet d'accéder à des accords de phase différents.

Le cristal non linéaire biréfringent peut être de façon générale tout cristal non linéaire présentant un accord de phase pour un processus de conversion de fréquence à une fréquence donnée.

Avantageusement, le cristal non linéaire biréfringent est choisi dans la famille des borates, par exemple et de façon non limitative le LBO (triborate de lithium ou $LiB_3O_5$), le LTB (tetraborate de lithium ou $LB_4$), le BBO (beta-borate de baryum ou $\beta$-$BaB_2O_4$), le BiBO (borate de bismuth ou $BiB_3O_6$), le CLBO (Borate de césium lithium ou $CsLiB_6O_{10}$), le YCOB ($YCa_4O(BO_3)_3$) ou le GdCOB ($GdCa_4O(BO_3)_3$) et toutes les compositions chimiques mixtes comme par exemple GdxY(1-x)COB avec x allant de 0 à 1 ; le cristal non linéaire peut être choisi également dans les cristaux formés à base de titanyl, par exemple et de façon non limitative, le KTP (titanyl phosphate de potassium ou $KTiOPO_4$), KTA (titanyl arséniate de potassium ou $KTiOAsO_4$), RTP (titanyl phosphate de rubidium ou $RbTiOPO_4$), le RTA (titanyl arséniate de rubidium ou $RbTiAsPO_4$) ; le cristal non linéaire peut également être choisi parmi l'un des cristaux suivant, le KDP (dihydrogéno-phosphate de potassium ou $KH_2PO_4$), le KD*P (deutérium phosphate de potassium ou $KD_2PO_4$), le LN (niobate de lithium ou $LiNbO_3$), le MgO:LN (niobate de lithium dopé à l'oxyde magnésium ou $MgO:LiNbO_3$).

Selon une variante préférée, le cristal non linéaire biréfringent est choisi parmi un cristal non linéaire de faible biréfringence, par exemple le CLBO, le LBO, le LN, les déposants ayant montré que ces cristaux permettaient d'obtenir une variation relative de la biréfringence par application d'une force mécanique extérieure plus importante.

Avantageusement, la cellule de conversion de fréquence comprend en outre une interface au niveau de la ou des face(s) de contrainte, formée d'un matériau de dureté inférieure à celle du cristal non linéaire, afin d'obtenir une meilleure uniformité de la force appliquée sur toute la face d'application de la force. L'interface est avantageusement formée d'un matériau déformable, non compressible, permettant de faciliter le glissement des deux solides en contact de part et d'autre de l'interface, et présentant une bonne mouillabilité sur le cristal non linéaire, comme par exemple l'indium ou l'étain.

Selon l'invention, la cellule de conversion de fréquence comprend en outre des moyens de réglage de la force mécanique extérieure pour l'accordabilité en longueur d'onde de la cellule de conversion.

Selon une variante, la cellule de conversion de fréquence comprend en outre des moyens de réglage de la force mécanique extérieure appliquée en fonction de la température. Ces moyens de réglage peuvent permettre de stabiliser le cristal vis-à-vis des fluctuations thermiques extérieures mais aussi d'ajuster finement la biréfringence par température.

Selon une variante, les moyens d'application de la force mécanique extérieure comprennent une vis apte à entraîner la translation d'un élément bloqué en rotation. Une telle structure permet de transformer un couple de torsion en une force mécanique verticale et constitue un dispositif simple et bon marché pour appliquer des forces mécaniques extérieures très importantes.

Selon un deuxième aspect, l'invention concerne un système convertisseur de fréquence comprenant une source d'émission d'au moins un faisceau laser incident de longueur d'onde donnée et une cellule de conversion de fréquence selon le premier aspect, pour la conversion de fréquence à ladite longueur d'onde.

Selon l'invention, la source d'émission du système convertisseur de fréquence permet l'émission d'un faisceau présentant une large bande spectrale, c'est-à-dire plus large que l'acceptation spectrale du cristal non linéaire biréfringent, permettant d'obtenir l'accordabilité en longueur d'onde du système convertisseur de fréquence, lorsque la cellule de conversion de fréquence comprend des moyens de réglage de la force mécanique extérieure pour l'accordabilité en longueur d'onde de la cellule de conversion.

Selon un troisième aspect, l'invention concerne un procédé de conversion de fréquence comprenant :

- l'envoi d'au moins un faisceau laser incident sur une face d'entrée d'un cristal non linéaire biréfringent caractérisé par une première longueur d'onde d'accord de phase, ledit cristal présentant en outre une face de sortie pour l'émission d'au moins un faisceau converti en fréquence, et au moins deux faces parallèles différentes des faces d'entrée et de sortie,

- l'application d'une force mécanique extérieure sur au moins une des faces parallèles, appelée face d'application de la force, résultant en une variation de la biréfringence du cristal non linéaire, la valeur de la force mécanique extérieure appliquée étant déterminée pour l'obtention de l'accord de phase dans le cristal non linéaire, à une deuxième longueur d'onde différente de la première longueur d'onde d'accord de phase.

Avantageusement, la force mécanique extérieure n'est appliquée que sur l'une des deux faces parallèles, appelée face d'application de la force, la contrainte subie par le cristal non linéaire résultant de l'application de la force mécanique appliquée sur cette face et de la force de réaction résultante sur la face parallèle opposée. Selon une variante, il est possible d'appliquer une force mécanique extérieure sur les deux faces parallèles, ce qui permet d'obtenir une contrainte de compression pure.

Dans les deux cas, on cherche l'application d'une force mécanique la plus uniforme possible sur l'ensemble de la ou des face(s) d'application de la force de façon notamment à augmenter le seuil de fracture du cristal non linéaire biréfringent.

Avantageusement, la force mécanique extérieure est appliquée sur la ou les face(s) d'application de la force au travers d'une interface en un matériau moins dur que le cristal non linéaire biréfringent, par exemple l'indium ou l'étain, ce qui permet d'augmenter encore l'uniformité d'application de la force mécanique extérieure.

La force mécanique extérieure appliquée est par exemple comprise entre 10 MPa et 100 GPa.

Selon une variante, le procédé de conversion de fréquence comprend en outre le réglage de la force mécanique extérieure appliquée pour l'accordabilité en longueur d'onde.

Selon une variante, le procédé de conversion de fréquence comprend en outre le réglage de la force mécanique extérieure appliquée en fonction de la température.

BREVE DESCRIPTION DES DESSINS

D'autres avantages et caractéristiques de l'invention apparaîtront à la lecture de la description, illustrée par les figures suivantes :

- Figures 1A et 1B, déjà décrites, l'évolution des indices ordinaire et extraordinaire du BBO en fonction de la longueur d'onde et un schéma illustrant la propagation d'une onde incidente polarisée dans un cristal avec polarisation formant un angle $\theta$ avec l'un des axes cristallographiques du cristal ;

- Figure 2, un schéma illustrant le procédé de conversion de fréquence avec une cellule de conversion selon la présente description ;

- Figure 3, un schéma illustrant le principe de la déformation d'un cristal sous contrainte ;

- Figure 4, des courbes montrant des premiers résultats de doublage de fréquence à 1030 nm avec un cristal de RTP, avec et sans application d'une contrainte mécanique ;

- Figure 5 le schéma d'une cellule de conversion de fréquence selon un exemple de réalisation ;

- Figures 6A et 6B, des schémas de montages expérimentaux utilisés pour caractériser l'uniformité de la contrainte appliquée et le seuil de fracture (6A), ainsi que la génération de 2ème harmonique (6B);

- Figures 7A et 7B, des résultats expérimentaux montrant l'influence d'une interface en Indium respectivement sur l'uniformité de la contrainte et sur le seuil de fracture ;

- Figures 8A à 8C des résultats expérimentaux obtenus avec le LBO.

## DESCRIPTION DETAILLEE

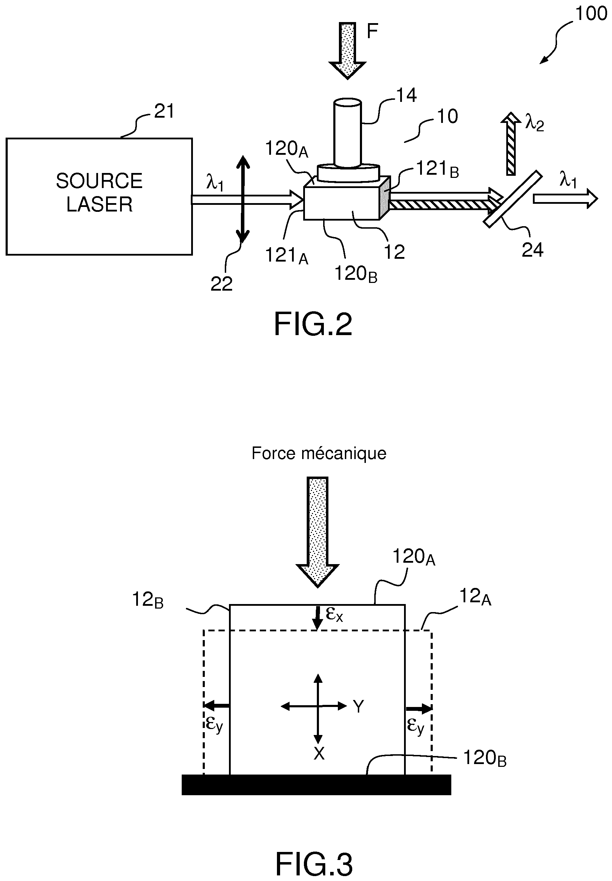

La figure 2 illustre de façon générale un système de conversion de fréquence 100 selon la présente description. Il comprend une source laser 21 pour l'émission d'un ou plusieurs faisceau(x) laser incident(s) sur une face d'entrée $121_A$ d'un cristal non linéaire biréfringent 12. Le cristal non linéaire 12 fait partie d'une cellule de conversion de fréquence 10 qui comprend par ailleurs des moyens 14 d'application d'une force mécanique extérieure F sur au moins une face $120_A$ du cristal non linéaire, ladite face, appelée face d'application de la force dans la présente description, étant différente de la face d'entrée $121_A$ et de la face de sortie $121_B$ du cristal. Selon une variante, la force mécanique extérieure peut être appliquée sur deux faces parallèles $120_A$, $120_B$. Le système 100 représenté sur la figure 2 est par exemple un système de doublage de fréquence. Ainsi un faisceau incident de longueur d'onde $\lambda_1$ est converti en un faisceau de longueur d'onde $\lambda_2$. Les faisceaux aux longueurs d'onde $\lambda_1$ et $\lambda_2$ sont séparés en sortie de la cellule de conversion au moyen d'une lame séparatrice en longueurs d'onde 24. Le système de conversion de fréquence comprend également dans cet exemple des moyens de focalisation 22 du faisceau incident dans le cristal non linéaire 12.

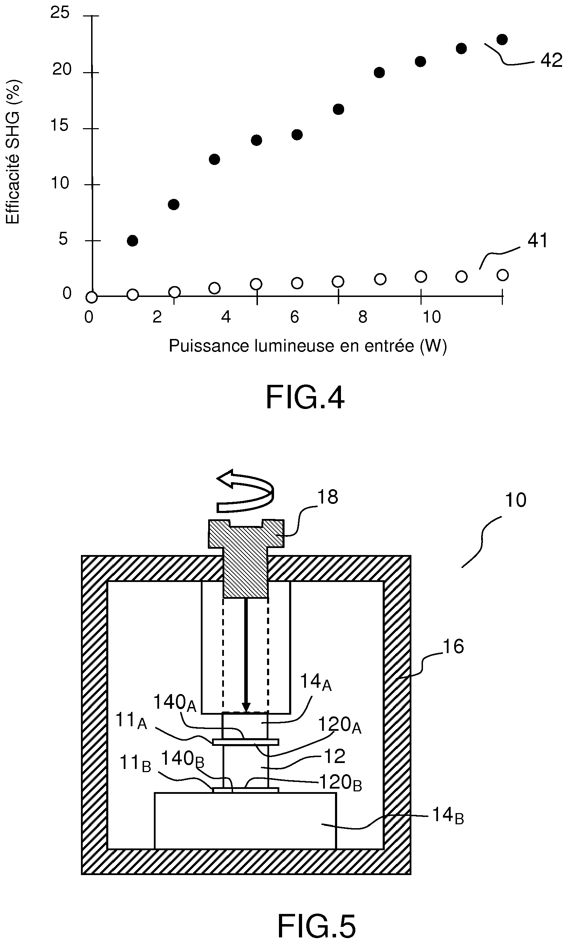

Le principe mis en œuvre pour la modification de la biréfringence du cristal non linéaire est basé sur la photoélasticité du matériau formant le cristal; il est expliqué ci-dessous au moyen de la figure 3 et une validation expérimentale avec un cristal non linéaire de RTP est montrée sur la figure 4.

Lorsque l'on applique une contrainte $\sigma$ à un matériau, cela entraîne une déformation locale $\varepsilon$ du matériau, les deux valeurs étant liées par la loi de Hooke généralisée :

$$\boldsymbol{\sigma} = \mathbf{C}\boldsymbol{\varepsilon} \qquad (1)$$

$$\boldsymbol{\varepsilon} = \mathbf{S}\,\boldsymbol{\sigma} \qquad (2)$$

où $\mathbf{C}$ et $\mathbf{S}$ sont respectivement les matrices d'élasticité et de rigidité du matériau considéré. Les quantités $\mathbf{C}$ et $\mathbf{S}$ sont des tenseurs symétriques d'ordre 4, et les composantes $\sigma$ et $\varepsilon$ sont des tenseurs d'ordre 2. Les relations (1) et (2) permettent de lier les 6 composantes du tenseur de contrainte $\sigma$ aux 6 composantes du tenseur de déformation $\varepsilon$.

La déformation locale $\varepsilon$ entraîne une variation de l'indice optique (effet photo-élastique) selon l'expression :

$$\Delta\left(\frac{1}{n_i^2}\right) = \sum_{j=1..3} \rho_{ij}\varepsilon_j \qquad (3)$$

Où $n_i$ est l'indice de réfraction selon une direction privilégiée du cristal (i) et $\rho_{ij}$ et $\varepsilon_j$ sont les coefficients respectivement des tenseurs élasto-optiques et de déformation.

Ainsi, en appliquant une force mécanique extérieure sur l'une des faces d'un cristal, dont la forme avant déformation est indiquée en traits pleins par la référence $12_B$ sur la figure 3, le cristal non linéaire se trouve comprimé selon l'axe d'application de la force et étiré selon l'axe perpendiculaire (forme déformée indiquée en pointillés par la référence $12_A$ sur la figure 3).

De cette manière, en appliquant la force mécanique extérieure selon un axe cristallographique choisi, on peut augmenter ou diminuer la biréfringence $\Delta n$ du cristal non linéaire, où $\Delta n$ est donnée par l'équation :

$$\Delta n = n_y(2\omega) - n_z(\omega) \qquad (4)$$

Où $n_y$ est l'indice optique selon l'axe Y, $n_z$ est l'indice optique selon l'axe Z, Y et Z étant les axes cristallographiques du cristal et $\omega$ est la pulsation.

La figure 4 illustre une première validation expérimentale du principe mis en œuvre dans la présente description et appliquée à l'efficacité de conversion dans une configuration de doublage de fréquence (SHG) dans un cristal de RTP ($RbTiOPO_4$).

Le RTP est un cristal non-linéaire connu pour pouvoir être utilisé pour la génération de second harmonique de l'infrarouge vers le vert (voir par exemple l'article de J. Mangin et al., « Thermal Expansion, normalized thermo-optic coefficients, and conditions for second harmonie generation of a Nd :YAG laser with wide temperature bandwidth in RbTiOPO4 », Journal of Optical Society of Amercia B, Vol.28, no. 4, 2011). Si le RTP possède des propriétés très intéressantes pour la génération de second harmonique vers 1032 nm, il n'a pas, par contre, d'accord de phase par biréfringence possible pour les longueurs d'onde fondamentales inférieures à 1031,6 nm. On ne peut donc pas l'utiliser par exemple avec les lasers ayant comme milieu à gain des matériaux dopés à l'ytterbium émettant à 1030 nm. Habituellement, un tel problème peut être facilement réglé en chauffant le cristal, ce qui permet de décaler les accords de phase vers des longueurs d'onde plus courtes. Cependant, le RTP est insensible en température aux alentours de 1030 nm.

Un accord de phase mécanique est mis en œuvre au moyen du montage expérimental représenté sur la figure 2.

Dans cette expérience, la source laser 21 est un laser infrarouge émettant à 1030 nm de puissance crête suffisante pour obtenir un rendement de doublement de fréquence correct, soit typiquement plus de 50%. A cette longueur d'onde, le RTP ne permet pas la génération de second harmonique. L'application d'une contrainte mécanique a permis de changer les indices optiques ordinaire et extraordinaire de façon à ce que l'accord de phase à 1030 nm devienne possible.

La figure 4 montre ainsi le rendement de doublement de fréquence (en %) en fonction de la puissance optique incidente à 1030 nm, dans le cas (courbe 41) où le cristal est non contraint et dans le cas (courbe 42) où le cristal est soumis à une force mécanique extérieure de plusieurs MPa.

Ainsi cette validation expérimentale montre que l'application d'une force mécanique extérieure permet effectivement de décaler l'accord de phase et ainsi de générer efficacement un faisceau à 515 nm, longueur d'onde de conversion inaccessible avec le RTP jusqu'alors.

La figure 5 montre un exemple de réalisation d'une cellule de conversion 10 particulièrement avantageuse pour l'application d'une contrainte uniforme que les faces du cristal non linéaire. La monture comprend dans cet exemple un cadre indéformable 16, par exemple un cadre en acier. On applique un couple à une vis 18 qui entraîne la translation d'un élément bloqué en rotation 14A. Cet élément vient en contact avec la face $120_A$ d'application de la force du cristal 12, qui repose sur un élément fixe $14_B$ du cadre 16, par exemple un élément en acier. A l'interface entre la face $140_A$ de l'élément $14_A$ qui vient en contact avec la face $120_A$ d'application de la force du cristal, on dispose avantageusement une feuille $11_A$ d'un matériau moins dur que le cristal non linéaire, par exemple une feuille d'indium ou d'étain. Une feuille $11_B$ de ce même matériau peut également être agencée entre la face de l'élément fixe $14_B$ du cadre 16 destiné à venir en contact avec la face $120_B$ du cristal non linéaire, parallèle et opposée à la face $120_A$ d'application de la force.

Les déposants ont procédé à des tests systématiques sur un certain nombre de cristaux non linéaires biréfringents afin de tester à la fois la résistance mécanique (seuil de fracture) et l'obtention d'un effet de doublage de fréquence.

Dans la présente description, le seuil de fracture est la valeur de la force mécanique extérieure appliquée à partir de laquelle on observe l'apparition d'une « fracture » ou « fissure » sur le cristal non linéaire, qui se traduit par une perte des qualités optiques du cristal dues notamment aux effets de diffusion.

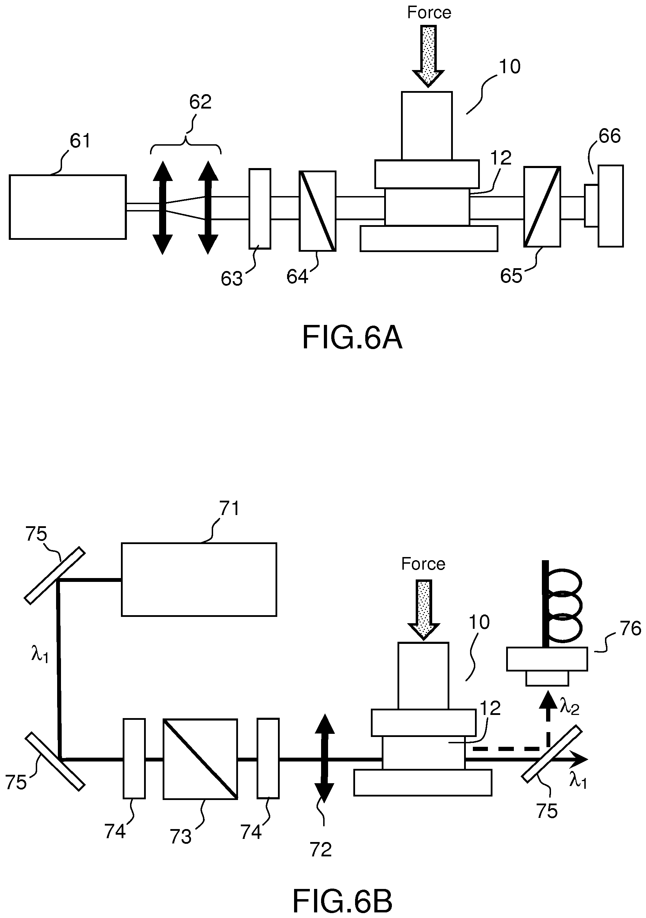

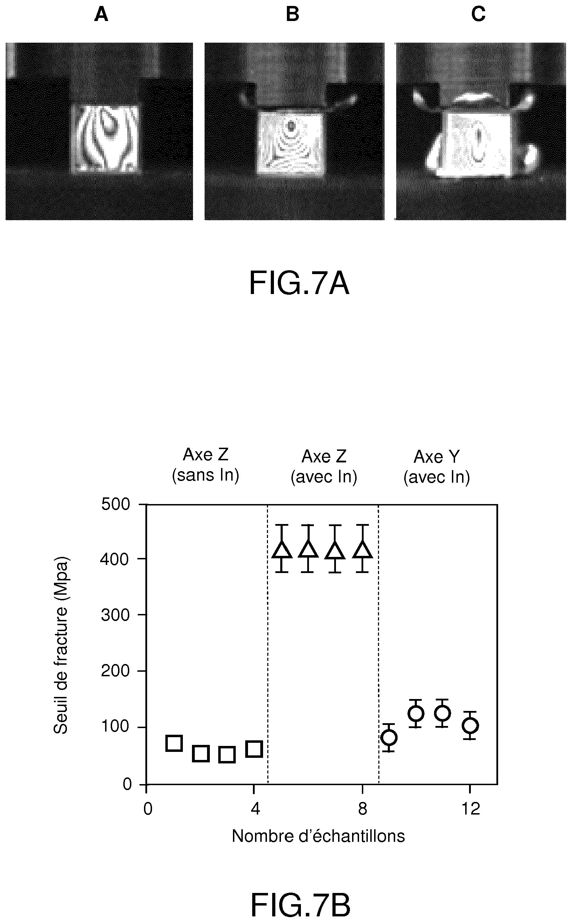

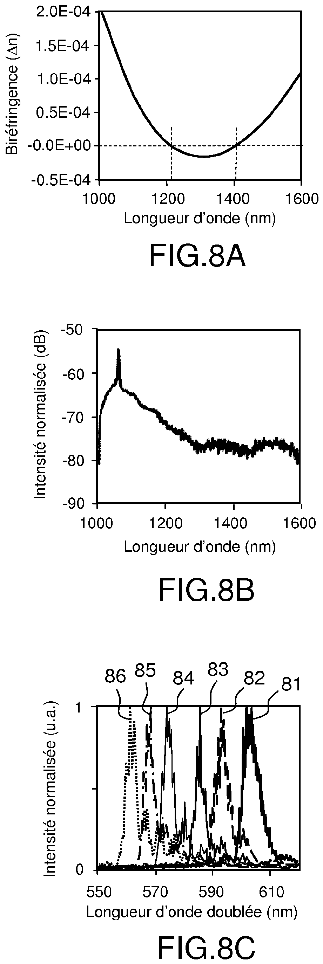

Des montages expérimentaux pour ces tests sont montrés sur les figures 6A et 6B tandis que les figures 7A, 7B et 8A à 8C représentent des résultats obtenus avec le LBO ($LiB_3O_5$).

Le LBO est un cristal d'excellente qualité couramment utilisé pour la génération de second harmonique ; il possède une large bande spectrale de transparence, de 160 nm à 2 $\mu$m environ, mais n'est pas assez biréfringent pour effectuer des conversions non-linéaires vers l'UV lointain. Les déposants ont montré que l'application d'une contrainte mécanique suffisamment forte permettait de décaler les accords de phase et de rendre possible la génération de quatrième harmonique dans le LBO.

Il apparaît que la modification de la longueur d'onde d'accord de phase dépend de l'amplitude de déformation que celui-ci peut supporter avant l'apparition d'une fracture. Le seuil de fracture théorique d'un matériau est parfois donné à un dixième du module d'Young, mais le seuil de fracture réel est souvent mesuré à un à deux ordres de grandeur en dessous de cette limite théorique. Ce seuil est dépendant de la qualité de la surface du cristal (planéité et rugosité) et de l'homogénéité des contraintes appliquées.

Une première expérience dont un montage expérimental est représenté sur la figure 6A est mise en place afin de déterminer à la fois le seuil de fracture du cristal non linéaire considéré et l'uniformité de la contrainte appliquée sur la face d'application de la force. Le montage expérimental comprend une source laser 61 et un objectif afocal 62 pour la formation d'un faisceau laser collimaté. La source laser est par exemple un laser Hélium-Néon continu émettant à 633 nm. Le cristal non linéaire 12 à étudier est placé dans une cellule de conversion de longueur d'onde 10 du type de celle représentée sur la figure 5. Le cristal 12 est placé entre polariseurs croisés avec à l'entrée une lame demi-onde 63 associé à un polariseur 64 et à la sortie, un polariseur 65 Les axes cristallographiques sont placés à 45 ° des axes de polarisation des deux polariseurs croisés. Un détecteur bidimensionnel 66, par exemple une caméra CMOS, est agencée afin de pouvoir observer des motifs d'interférence formés après passage de la lumière au travers du cristal et résultant du déphasage entre les axes neutres.

Plus précisément, la cellule de conversion 10, par exemple du type de celle représentée sur la figure 5, est conçue pour appliquer mécaniquement une force mécanique extérieure verticale et éviter les effets de torsion parasites. Dans les tests expérimentaux présentés dans ces exemples, des forces entre 0 et 12 kN sont appliquées avec une précision de +/- 0,1 kN. La force mécanique extérieure est appliquée au moyen d'un élément dont la face destinée à venir en contact avec la face du cristal non linéaire est polie et présente une section de 4x12 mm². Si la contrainte appliquée n'est pas uniforme, le point d'effort local peut provoquer une fracture prématurée du cristal. Comme expliqué précédemment, l'interface entre le cristal non linéaire et l'élément d'application de la force peut être adaptée pour augmenter l'uniformité de la force appliquée sur toute la face d'application du cristal. Ainsi, l'effet de l'indium comme matériau d'interface pour accroître l'uniformité est testé. L'indium est une matière très souple qui peut mouiller les surfaces métalliques, et peut ainsi réduire fortement les défauts possibles entre la face du cristal non linéaire et la face de l'élément destiné à venir en contact.

La figure 7A montre les figures d'interférence enregistrées avec la caméra 66 lorsqu'un cristal non linéaire de LBO est utilisé, dans trois configurations A, B, C ; Le cristal de LBO est dans cet exemple taillé le long de l'axe X et contraint le long de son axe Z par une force mécanique extérieure de module juste inférieur au seuil de fracture Les configurations A, B, C correspondent respectivement à une configuration dans laquelle il n'y a pas d'interface en Indium, une configuration dans laquelle une interface en Indium est utilisée seulement sur la face supérieure du cristal non linéaire, et une configuration dans laquelle des interfaces en Indium sont présentes sur chacune des faces du cristal. La configuration A montre que la contrainte appliquée n'est pas uniforme. Avec la configuration B, la contrainte est plus uniforme mais il apparait des contraintes dans les coins inférieurs du cristal, la face inférieure du cristal ayant des difficultés à se déformer. Dans la configuration C, la face inférieure peut glisser par rapport à la monture grâce à l'interface en indium et donc se déformer. La figure est symétrique, les faces supérieure et inférieure se déforment de la même façon.

La figure 7B montre le seuil de fracture d'échantillons dans différentes configurations. Dans la première configuration (représentée sur la colonne de gauche de la figure 7B), le cristal de LBO est contraint directement sans matériau d'interface le long de son axe Z. L'uniformité de la contrainte sur la face du cristal est faible et on observe des fissures apparaître sur la surface inférieure. La contrainte maximum applicable mesurée dans ce cas est de 30 Mpa. Quand une feuille d'indium de 200 µm est insérée entre la face du cristal et la face de l'élément venant appliquer la force mécanique (configuration représentée sur la colonne centrale de la figure 7B), le seuil de fracture est porté à 400 Mpa. Dans cette configuration cependant, les coins inférieurs du cristal non linéaire souffrent d'une augmentation de la contrainte du fait que la surface inférieure n'est pas en mesure de s'étendre. Si une seconde feuille d'indium est insérée sous la face inférieure du cristal non linéaire, la biréfringence induite devient très uniforme, et le seuil d'endommagement s'élève à 500 Mpa. La figure 7B illustre une troisième configuration, dans laquelle le cristal de LBO est contraint le long de l'axe Y. Dans ce cas, le seuil d'endommagement tombe à 100 MPa, du fait de l'anisotropie des coefficients élasto-optiques du LBO.

Les figures 8A à 8C illustrent les résultats obtenus en doublage de fréquence avec un cristal de LBO. Le montage expérimental utilisé est montré sur la figure 6B.

Dans un cristal biaxe négatif du type du cristal de LBO, la condition d'accord de phase non critique dans un processus de génération de second harmonique de type I s'écrit :

$$n_z(\omega) = n_y(2\omega) \qquad\qquad (5)$$

Combinée avec l'équation Sellmeier qui donne l'indice de réfraction n en fonction de la longueur d'onde, on peut calculer la biréfringence $\Delta n$ (donnée par l'équation (4) ci-dessus) en fonction de la longueur d'onde $\lambda$ ; la courbe est représentée dans le cas d'un cristal de LBO de type « X-cut » (taille dans le plan $\theta = 90°$) sur la figure 8A. Dans cette configuration, l'onde fondamentale se propage avec un champ électrique parallèle à l'axe Z et l'onde doublée en fréquence se propage avec un champ électrique parallèle à l'axe Y. On observe sur la figure 8A que la condition d'accord de phase est satisfaite à température ambiante ($\Delta n = 0$) pour deux longueurs d'onde, à savoir 1200 nm et 1400 nm. Un changement de la longueur d'onde d'accord de phase dans l'intervalle entre 1200 nm et 1400 nm nécessite donc un accroissement de la biréfringence, tandis qu'un changement de la longueur d'onde d'accord de phase vers des valeurs inférieures à 1200 nm ou supérieures à 1400 nm nécessite une diminution de la biréfringence.

Une expérience de génération d'harmoniques avec le cristal de LBO contraint est réalisée au moyen du montage expérimental représenté sur la figure 6B. Le montage comprend une source laser fibrée 71 délivrant un rayonnement sur une bande spectrale comprise entre 400 nm et 2 µm par effets non linéaires (appelé supercontinuum blanc) et émettant des impulsions picosecondes de puissance optique allant jusqu'à 4 W, avec un taux de répétition de 40 MHz. Le signal est filtré au moyen de miroirs dichroïques 75, 76 pour obtenir une bande spectrale dans l'infrarouge (entre 1000 et 1600 nm). La répartition de l'intensité des impulsions filtrées en fonction de la longueur d'onde est mesurée avec un analyseur de spectre optique et présenté sur la figure 8B. Le rayonnement résiduel entre 1000 nm et 1600 nm est focalisé à l'intérieur du cristal non linéaire 12 au moyen d'un objectif de focalisation 74 et présente dans le cristal un diamètre de focalisation de 50 $\mu$m environ. La longueur d'onde de l'onde doublée en fréquence est mesurée avec un spectromètre visible 76 (190-600 nm, résolution +/- 0,3 nm). On s'assure par ailleurs que le cristal non linéaire est correctement aligné à l'angle d'accord de phase. Dans l'expérience ainsi réalisée, le cristal de LBO est contraint le long de l'axe Y, et la biréfringence est augmentée. On s'attend ainsi à voir diminuer la longueur d'onde d'accord de phase en dessous de 1200 nm. Une force mécanique extérieure est appliquée sur la surface du cristal jusqu'à une valeur de 100 MPa, qui correspond au seuil de fracture du cristal. Les résultats sont présentés sur la figure 8C sur laquelle est représentée l'intensité normalisée en fonction de la longueur d'onde. On observe un décalage de la longueur d'onde d'accord de phase de 1200 nm à 1120 nm.

Les expériences ainsi réalisées valident le procédé décrit dans la présente description et visant à modifier la longueur d'onde d'accord de phase d'un cristal non linéaire biréfringent par l'application d'une force mécanique. On vérifie que l'amplitude de cette modification n'est limitée que par le seuil de fracture du matériau. Ces résultats peuvent être comparés au changement de la longueur d'onde d'accord de phase induite par la température dans un cristal non linéaire de LBO et décrite par exemple dans l'article de T. Ukachi et al. cite plus haut. Par application d'une contrainte mécanique, les déposants ont montré qu'il était possible de changer la longueur d'onde d'accord de phase d'une valeur égale à celle résultant d'une augmentation de température d'environ 60 ° C. En outre, dans ces expériences, aucun traitement particulier n'a été appliqué sur les faces de contrainte. On s'attend à ce qu'un polissage optique des faces de contrainte du cristal et/ou une gravure chimique permettent d'améliorer le seuil de fracture du cristal jusqu'à 10 fois, permettant d'étendre encore d'avantage la plage de modification de la longueur d'onde d'accord de phase.

D'autres cristaux non linéaires biréfringents s'avèrent prometteurs pour la mise en œuvre d'une cellule de conversion selon la présente description.

Ainsi, le LTB (LB$_4$) est un cristal non linéaire transparent dans l'UV, suffisamment biréfringent pour réaliser une génération de quatrième harmonique. Mais ses propriétés non-linéaires ne sont pas suffisantes pour atteindre des rendements de conversion satisfaisants, sauf dans une configuration d'accord de phase non-critique (cristal taillé selon l'un de ses axes optiques), dans laquelle ses propriétés deviennent très intéressantes. Ce cristal étant par ailleurs peu sensible en température, seuls quelques accords de phase spécifiques sont possibles. L'application d'une contrainte mécanique selon la présente description permet d'étendre les possibilités d'accord de phase de ce cristal en configuration non-critique.

Par ailleurs, le procédé décrit dans la présente description est une technique passive, qui ne nécessite pas d'apport d'énergie une fois que la contrainte est appliquée. En outre, le procédé décrit ne nécessite que la mise en œuvre d'éléments mécaniques et pourrait être conçu dans un système de conversion de fréquences bas coût. Bien que les validations expérimentales aient été montrées dans le cas particulier de l'accord de phase non critique, le procédé décrit s'applique à tout processus non linéaire qui nécessite une modification de la biréfringence.

Bien que décrite à travers un certain nombre d'exemples de réalisation détaillés, le procédé et le dispositif de conversion de fréquence selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Système convertisseur de fréquence comprenant :

   - une source d'émission (21) pour l'émission d'un faisceau laser incident à large bande spectrale;
   - une cellule de conversion de fréquence (10) comprenant.

      - un cristal non linéaire biréfringent (12) **caractérisé par** une première longueur d'onde d'accord de phase, présentant une face d'entrée (121$_A$) destinée à recevoir le faisceau incident, une face de sortie (121$_B$) pour l'émission d'au moins un faisceau converti en fréquence, et au moins deux faces parallèles (120$_A$, 120$_B$), différentes des faces d'entrée et de sortie ;
      - **caractérisée par** des moyens d'application (14, 14$_A$) d'une force mécanique extérieure sur au moins une desdites faces parallèles (120$_A$), appelée face d'application de la force, résultant en une variation de la biréfringence du cristal non linéaire, la valeur de la force mécanique extérieure appliquée étant déterminée pour l'obtention de l'accord de phase à une deuxième longueur d'onde d'accord de phase différente de la première longueur d'onde d'accord de phase ; et
      - des moyens de réglage de la force mécanique extérieure pour l'accordabilité en longueur d'onde de la cellule de conversion.

2. Système convertisseur de fréquence selon la revendication 1, dans lequel la force mécanique extérieure est appliquée de façon sensiblement uniforme sur la face d'application de la force.

3. Système convertisseur de fréquence selon l'une quelconque des revendications, dans lequel la cellule de conversion de fréquence comprend en outre une interface en un matériau moins dur que le cristal non linéaire au niveau de la ou des face(s) d'application de la force.

4. Système convertisseur de fréquence selon l'une quelconque des revendications, dans lequel la cellule de conversion de fréquence comprend en outre des moyens de réglage de la force mécanique extérieure en fonction de la température.

5. Système convertisseur de fréquence selon l'une quelconque des revendications précédentes, dans lequel les moyens d'application de la force mécanique extérieure comprennent une vis (18) apte à entraîner la translation d'un élément ($14_A$) bloqué en rotation.

6. Système convertisseur de fréquence selon l'une quelconque des revendications précédentes, dans lequel le cristal non linéaire biréfringent est taillé selon ses plans principaux, et dans lequel un faisceau incident est destiné à pénétrer dans le cristal non linéaire selon un axe de propagation perpendiculaire à la face d'entrée, permettant un accord de phase non critique.

7. Système convertisseur de fréquence selon l'une quelconque des revendications précédentes, dans lequel le cristal non linéaire biréfringent est choisi parmi le CLBO, le LBO, le LN.

8. Procédé de conversion de fréquence comprenant :

- l'envoi d'au moins un faisceau laser incident à large bande spectrale sur une face d'entrée ($121_A$) d'un cristal non linéaire biréfringent (12) **caractérisé par** une première longueur d'onde d'accord de phase, ledit cristal présentant en outre une face de sortie ($121_B$) pour l'émission d'au moins un faisceau converti en fréquence, et au moins deux faces parallèles ($120_A$, $120_B$) différentes des faces d'entrée et de sortie,
- l'application d'une force mécanique extérieure sur au moins une des faces parallèles ($120_A$), appelée face d'application de la force, résultant en une variation de la biréfringence du cristal non linéaire, la valeur de la force mécanique extérieure appliquée étant déterminée pour l'obtention de l'accord de phase dans le cristal non linéaire à une deuxième longueur d'onde d'accord de phase différente de la première longueur d'onde d'accord de phase ; et
- le réglage de la force mécanique extérieure appliquée pour l'accordabilité en longueur d'onde

9. Procédé de conversion de fréquence selon la revendication 8, dans laquelle la force mécanique extérieure appliquée est comprise entre 10 MPa et 100 GPa.

10. Procédé de conversion de fréquence selon l'une quelconque des revendications 8 ou 9, dans laquelle la force mécanique extérieure est appliquée sur la ou les face(s) d'application de la force au travers d'une interface en un matériau moins dur que le cristal non linéaire.

11. Procédé de conversion de fréquence selon l'une quelconque des revendications 8 à 10, comprenant en outre le réglage de la force mécanique extérieure appliquée en fonction de la température.

**Patentansprüche**

1. Frequenzumwandlersystem, Folgendes beinhaltend:

- eine Emissionsquelle (21) zum Emittieren eines einfallenden Laserstrahls mit breitem Spektralband;
- eine Frequenzumwandlungszelle (10), Folgendes beinhaltend:

- einen nichtlinearen, doppeltbrechenden Kristall (12), **gekennzeichnet durch** eine erste Phasenabstimmungs-Wellenlänge, welcher eine Eingangsseite ($121_A$) aufweist, welche dazu bestimmt ist, den einfallenden Strahl aufzunehmen, eine Ausgangsseite ($121_B$) zum Emittieren von mindestens einem frequenzumgewandelten Strahl, und mindestens zwei parallele Seiten ($120_A$, $120_B$), welche sich von der Eingangs- und der Ausgangsseite unterscheiden;

9

- **gekennzeichnet durch** Mittel zum Aufbringen (14, 14$_A$) einer äußeren mechanischen Kraft auf mindestens eine der parallelen Seiten (120$_A$), genannt Kraftaufbringungsseite, welche eine Variation der Doppeltbrechung des nichtlinearen Kristalls verursacht, wobei der Wert der aufgebrachten äußeren mechanischen Kraft zum Erzielen der Phasenabstimmung auf eine zweite, sich von der ersten Phasenabstimmungswellenlänge unterscheidenden Wellenlänge bestimmt ist; und
- Mittel zum Einstellen der äußeren mechanischen Kraft zur Wellenlängenabstimmbarkeit der Umwandlungszelle.

2. Frequenzumwandlersystem nach Anspruch 1, bei welchem die äußere mechanische Kraft im Wesentlichen einheitlich auf die Kraftaufbringungsseite aufgebracht wird.

3. Frequenzumwandlersystem nach einem der vorhergehenden Ansprüche, bei welchem die Umwandlungszelle zudem eine Schnittstelle aus einem weniger harten Material wie der nichtlineare Kristall auf der Kraftaufbringungsseite oder den Kraftaufbringungsseiten beinhaltet.

4. Frequenzumwandlersystem nach einem der vorhergehenden Ansprüche, bei welchem die Umwandlungszelle zudem Einstellmittel der äußeren mechanischen Kraft entsprechend der Temperatur beinhaltet.

5. Frequenzumwandlersystem nach einem der vorhergehenden Ansprüche, bei welchem die Mittel zum Aufbringen der äußeren mechanischen Kraft eine Schraube (18) beinhalten, welche in der Lage ist, die Verschiebung eines in Rotation blockierten Elementes (14$_A$) zu bewirken.

6. Frequenzumwandlersystem nach einem der vorhergehenden Ansprüche, bei welchem der nichtlineare Kristall entsprechend seiner Hauptebenen geschliffen ist, und bei welchem ein einfallender Strahl dazu bestimmt ist, in den nichtlinearen Kristall entsprechend einer Fortpflanzungsachse einzutreten, welche rechtwinklig zur Eingangsseite ist, wodurch eine unkritische Phasenabstimmung ermöglicht wird.

7. Frequenzumwandlersystem nach einem der vorhergehenden Ansprüche, bei welchem der doppeltbrechende nichtlineare Kristall aus CLBO, LBO und LN ausgewählt ist.

8. Frequenzumwandlungsverfahren, Folgendes beinhaltend:

- das Senden von mindestens einem einfallenden Laser mit breitem Spektralband auf eine Eingangsseite (121$_A$) eines nichtlinearen, doppeltbrechenden Kristalls (12), **gekennzeichnet durch** eine erste Phasenabstimmungswellenlänge, wobei der Kristall zudem eine Ausgangsseite (121$_B$) zum Emittieren mindestens eines frequenzumgewandelten Strahls aufweist, und mindestens zwei parallele Seiten (120$_A$, 120$_B$), welche sich von der Eingangs- und der Ausgangsseite unterscheiden,
- Aufbringen einer äußeren mechanischen Kraft auf mindestens eine der parallelen Seiten (120$_A$), genannt Kraftaufbringungsseite, welche eine Variation der Doppeltbrechung des nichtlinearen Kristalls verursacht, wobei der Wert der aufgebrachten äußeren mechanischen Kraft zum Erzielen der Phasenabstimmung in dem nichtlinearen Kristall auf eine zweite, sich von der ersten Phasenabstimmungswellenlänge unterscheidenden Wellenlänge bestimmt ist; und
- Einstellen der äußeren mechanischen Kraft zur Wellenlängenabstimmbarkeit.

9. Frequenzumwandlungsverfahren nach Anspruch 8, bei welchem die aufgebrachte äußere mechanische Kraft zwischen 10 MPa und 100 GPa beträgt.

10. Frequenzumwandlungsverfahren nach einem der Ansprüche 8 oder 9, bei welchem die äußere mechanische Kraft auf die Kraftaufbringungsseite oder auf die Kraftaufbringungsseiten über eine Schnittstelle aus einem weniger harten Material wie der nichtlineare Kristall aufgebracht wird.

11. Frequenzumwandlungsverfahren nach einem der Ansprüche 8 bis 10, zudem beinhaltend das Einstellen der äußeren mechanischen Kraft, welche entsprechend der Temperatur aufgebracht wird.

**Claims**

1. Frequency converter system comprising:

- a transmission source (21) for transmitting an incident laser beam with a wide spectral band;
- a frequency conversion cell (10) comprising
- a non-linear birefringent crystal (12) which is **characterised by** a first phase matching wavelength which has an input face ($121_A$) which is intended to receive the incident beam, an output face ($121_B$) for the transmission of at least one beam which is converted in terms of frequency, and at least two parallel faces ($120_A$, $120_B$) which are different from the input and output faces;
- **characterised by** means (14, $14_A$) for applying an external mechanical force to at least one of the parallel faces ($120_A$), referred to as the application face of the force, resulting in a variation of the birefringence of the non-linear crystal, the value of the external mechanical force applied being determined in order to obtain the phase matching at a second phase matching wavelength which is different from the first phase matching wavelength; and
- means for adjusting the external mechanical force for the wavelength matching of the conversion cell.

2. Frequency converter system according to claim 1, wherein the external mechanical force is applied in a substantially uniform manner to the force application face.

3. Frequency converter system according to either of the preceding claims, wherein the frequency conversion cell further comprises an interface of a material which is less hard than the non-linear crystal at the force application face(s).

4. Frequency converter system according to any one of the preceding claims, wherein the frequency conversion cell further comprises means for adjusting the external mechanical force in accordance with the temperature.

5. Frequency converter system according to any one of the preceding claims, wherein the external mechanical force application means comprise a screw (18) which is capable of driving the translation of an element ($14_A$) which is blocked in terms of rotation.

6. Frequency converter system according to any one of the preceding claims, wherein the birefringent non-linear crystal is cut in accordance with the main planes thereof, and wherein an incident beam is intended to be introduced into the non-linear crystal according to a propagation axis which is perpendicular to the input face, enabling a non-critical phase matching.

7. Frequency converter system according to any one of the preceding claims, wherein the birefringent non-linear crystal is selected from CLBO, LBO, LN.

8. Frequency conversion method comprising:

- sending at least one incident laser beam with a wide spectral band to an input face ($121_A$) of a non-linear birefringent crystal (12), **characterised by** a first phase matching wavelength, the crystal further having an output face ($121_B$) for transmitting at least one beam which is converted in terms of frequency, and at least two parallel faces ($120_A$, $120_B$) which are different from the input and output faces,
- applying an external mechanical force to at least one of the parallel faces ($120_A$), referred to as the force application face, resulting in a variation of the birefringence of the non-linear crystal, the value of the external mechanical force applied being determined in order to obtain the phase matching in the non-linear crystal at a second phase matching wavelength which is different from the first phase matching wavelength; and
- adjusting the external mechanical force applied for the wavelength matching.

9. Frequency conversion method according to claim 8, wherein the external mechanical force applied is between 10 MPa and 100 GPa.

10. Frequency conversion method according to either claim 8 or claim 9, wherein the external mechanical force is applied to the force application face(s) via an interface of a material which is less hard than the non-linear crystal.

11. Frequency conversion method according to any one of claims 8 to 10, further comprising the adjustment of the external mechanical force applied in accordance with the temperature.

ART ANTERIEUR

FIG.1A

Type I

ART ANTERIEUR

FIG.1B

FIG.2

FIG.3

FIG.4

FIG.5

FIG.6A

FIG.6B

A        B        C

# FIG.7A

Axe Z (sans In)     Axe Z (avec In)     Axe Y (avec In)

Seuil de fracture (Mpa)

Nombre d'échantillons

# FIG.7B

FIG.8A

FIG.8B

FIG.8C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **T. UKACHI et al.** Measurements of non-critically phase-matched second-harmonic generation in a LBO crystal. *Appl. Phys. A Mater. Sci. Process,* 1973, vol. 280, 279-280

- **J. MANGIN et al.** Thermal Expansion, normalized thermo-optic coefficients, and conditions for second harmonie generation of a Nd :YAG laser with wide temperature bandwidth in RbTiOPO4. *Journal of Optical Society of Amercia B,* 2011, vol. 28 (4